# EUROPÄISCHE PATENTSCHRIFT

(11) **EP 1 112 209 B1**
(45) Veröffentlichungstag und Bekanntmachung des Hinweises auf die Patenterteilung: **08.01.2003**
(21) Anmeldenummer: 99969071.2
(22) Anmeldetag: 28.08.1999
(51) Int. Cl.: B62D 7/18

(54) **ACHSSCHENKEL**
STEERING KNUCKLE
FUSEE D'ESSIEU

(30) Priorität: 12.09.1998 DE 19841811
(43) Veröffentlichungstag der Anmeldung: 04.07.2001
(73) Patentinhaber: Adam Opel AG, 65423 Rüsselsheim (DE)
(72) Erfinder: GRAF, Gerhard, D-64569 Nauheim (DE); HARZHEIM, Lothar, D-55130 Mainz (DE)
(86) Internationale Anmeldenummer: DE9902704
(87) Internationale Veröffentlichungsnummer: WO00015484

(56) Entgegenhaltungen:
- DE-A- 2 624 704
- PATENT ABSTRACTS OF JAPAN vol. 1999, no. 13, 30. November 1999 (1999-11-30) & JP 11 208501 A (SUZUKI MOTOR CORP), 3. August 1999 (1999-08-03)

## Beschreibung

Die Erfindung bezieht sich auf einen Achsschenkel mit einer Nabe zur Aufnahme eines Radlagers und mit einer Konsole zur Befestigung eines Radlenkers, insbesondere eines Federbeins, wobei die Konsole an einem von der Nabe abstehenden Arm ausgebildet ist.

Das generelle Problem bei einem derartigen Achsschenkel besteht darin, daß er einerseits sehr leicht sein soll, damit die ungefederte Masse der Radaufhängung möglichst klein ist, und daß er andererseits über eine hohe Festigkeit verfügen muß, da an ihm praktisch alle Kräfte für die Längs- und Querverzögerung des Fahrzeuges und natürlich das Fahrzeuggewicht angreifen. Der bisher realisierte Kompromiß besteht in einem Achsschenkel, der aus einem Stahl- oder Eisenguß hergestellt wird.

Ein Beispiel hierfür ist in der DE-OS 26 24 704 A1 aufgezeigt. Das Gußstück weist eine Nabe auf, von der mehrere Arme abstehen. Ein Arm weist nach oben und mündet in eine Konsole, an der das untere Ende eines Federbeins mittels zweier Bolzen befestigt ist. Um die notwendige Steifigkeit zu erzielen, ist der Arm im Querschnitt V-förmig ausgeführt.

Aus der DE 43 13 624 A1 ist ein Achsschenkel bekannt, der im Metallstanzverfahren hergestellt wird. Als Vorteil gegenüber den gegossenen bzw. geschmiedeten Achsschenkeln wird die erreichbare Gewichtsreduzierung genannt. Der Achsschenkel ist im wesentlichen U-förmig, wobei die offene Seite zum Fahrzeug hin zeigt. Im unteren Bereich ist er zur Aufnahme eines Lagers eckig ausgeführt, d. h. die Schenkel stoßen in etwa senkrecht auf den Boden des U. Der obere Bereich bildet einen Arm für die Anlenkung eines Querlenkers und ist im Querschnitt halbkreisförmig ausgeführt. Eine dort eingesetzte Aufnahme für den Kugelzapfen des Querlenkers weist dementsprechend die Form einer Halbscheibe auf und wird mittels eines Bolzens zwischen den Schenkeln gehalten.

Eine ähnliche Ausführung ergibt sich aus der DE 195 33 315 C1. Bei dieser Ausführung wird die offene Seite des U-förmigen Achsschenkels durch eine Lasche geschlossen und damit zusätzlich verstärkt. Es liegt damit ein allseits geschlossener Arm vor.

Es wurde auch schon, u. a. in der DE 196 53 542 A1 vorgeschlagen, statt Stahl bzw. Eisen Leichtmetallegierungen, wie z. B. Aluminium einzusetzen. Dieses Material hat zwar den Vorteil, leicht zu sein, bringt aber gleichzeitig den Nachteil einer nicht ausreichenden Steifigkeit mit sich. In der Offenlegungsschrift wird daher vorgeschlagen, daß der Kern des Achsschenkels aus Leichtmetall von einem Hohlkörper aus einem höherfesten Material definierter Wandstärke gebildet wird. Es ist ohne weiteres ersichtlich, daß das dazu notwendige Herstellungsverfahren recht aufwendig ist.

Die Erfindung beruht somit auf dem Problem, einen möglichst leichten Achsschenkel, vorzugsweise aus einer Leichtmetallegierung, zu schaffen, der einfach herzustellen ist und bei ausreichender Festigkeit gute Steifigkeiten aufweist.

Um dieses Ziel zu erreichen, wird vorgeschlagen, daß ein Achsschenkel gemäß dem Oberbegriff des Anspruchs 1 so ausgeführt wird, daß der Arm von einer in etwa senkrecht stehenden Konsolenwand gebildet wird, an deren dem Fahrzeug zugewandten Seite die Konsole ausgebildet ist, und daß zwischen dem äußeren Ende der Konsolenwand sowie der Nabe eine Brücke verläuft, wobei der Raum zwischen der Konsolenwand und der Brücke zur Seite hin, d. h. in Umfangsrichtung der Nabe offen ist.

Es hat sich herausgestellt, daß durch diese Anordnung eine hohe Festigkeit erzielt wird, die insbesondere darauf zurückzuführen ist, daß diese Anordnung gegenüber einer Anordnung, bei der der Arm U-förmig ausgebildet und zum Fahrzeug hin offen ist, in Umfangsrichtung offen ist. Weiterhin hat sich gezeigt, daß die Dauerhaltbarkeit erhöht wird und eine kompakte Bauweise realisiert werden kann.

Weitere Ausgestaltungen des erfindungsgemäßen Achsschenkels sind in den Unteransprüchen beschrieben. Diese bestehen insbesondere darin, daß die Nabe zur Lenkerseite in eine Teilhülse übergeht, wobei die Konsolenwand an das freie Ende der Teilhülse anschließt. Außerdem kann die eine der offenen Seiten des Raums von einer Querwand geschlossen sein, wobei diese Wand in eine Abschnittsfläche an der Nabe übergeht, an der sich eine Konsole zur Befestigung eines Bremssattels befindet.

Vorzugsweise wird die Querwand so eingesetzt, daß die von ihr geschlossene Seite in Fahrtrichtung zeigt, so daß der so geformte Arm bezogen auf die Fahrtrichtung nach hinten offen ist.

Um am Achsschenkel eine Spurstange befestigen zu können, ist an der Unterseite der Nabe bzw. der Teilhülse eine in etwa horizontal verlaufende Tragwand ausgebildet, an deren freien Ende sich ein Befestigungsauge für die Spurstange befindet. Eine Verlängerung der Konsolenwand verläuft an der Teilhülse entlang und mündet senkrecht in die Tragwand ein.

Im folgenden soll die Erfindung anhand eines Ausführungsbeispiels näher erläutert werden. Dazu zeigen
- Fig. 1:: in perspektivischer Darstellung eine Sicht auf die Radseite des Achsschenkels und
- Fig. 2:: in perspektivischer Darstellung eine Sicht auf die Lenkerseite des Achsschenkels.

Die Radseite bezeichnet die Seite des Achsschenkels, an der sich im eingebauten Zustand das vom Radlager gehaltene Rad befindet, während die Lenkerseite die Seite bezeichnet, die dem Fahrzeug zugewandt ist. Der Aufbau des Achsschenkels wird im folgenden ausgehend von einer Nabe 1 beschrieben. Alle im folgenden bezeichneten Teilstücke sind, soweit sie in den Figuren dargestellt sind, zusammengesetzt als einteiliges Gußstück ausgeführt.

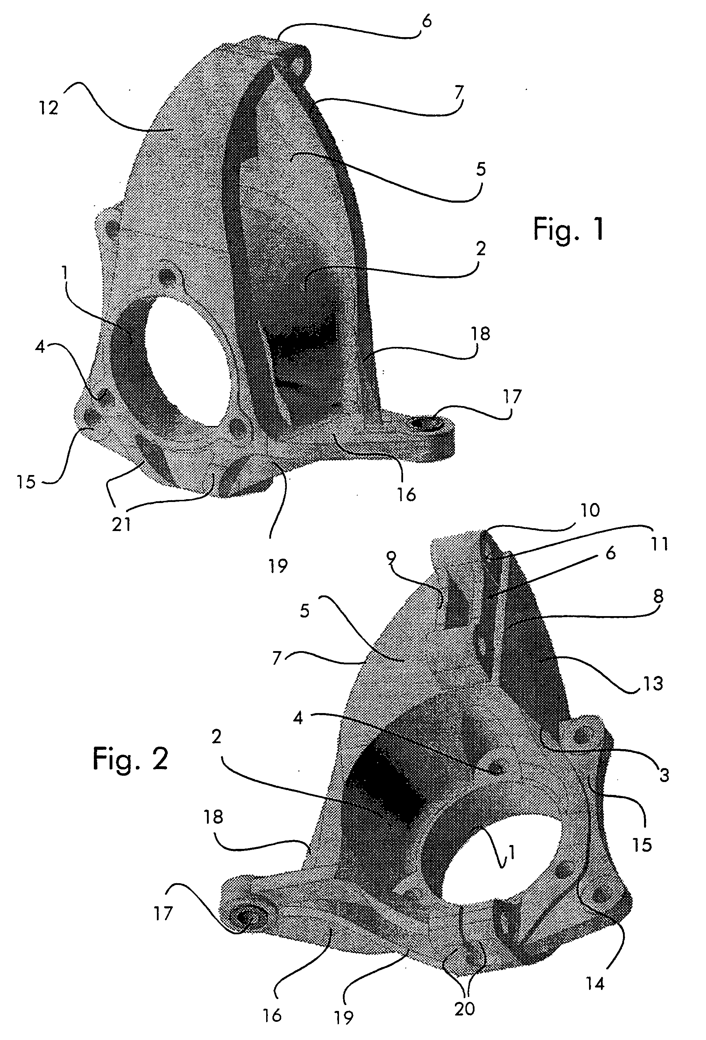

Die von einem Ring gebildete Nabe 1 dient der Aufnahme eines Lagers für eine Radachse. Auf der Lenkerseite ist die Nabe 1 durch eine Teilhülse 2 axial verlängert, die sich, bei Sicht auf die Lenkerseite (Fig. 2) im Uhrzeigersinn von sechs Uhr bis ca. zwei Uhr erstreckt. Am unteren Ende ist die Teilhülsenhöhe noch gering und nimmt erst bei ca. neun Uhr ihren maximalen Wert ein. Am oberen Ende läuft die leicht konisch aufgeweitete Teilhülse bogenförmig in einer Abschlußkante 3 aus. Auf dem Umfang der Nabe 1 verteilt befinden sich drei Bolzenlöcher 4 zur Befestigung des Radlagers. Soweit diese sich im Bereich der Teilhülse befinden, sind in der Hülsenwand Aussparungen zum Einführen der Bolzen vorgesehen.

Vom freien Ende der Teilhülse 2 ausgehend erhebt sich mit einer Basis, die sich von etwa neun Uhr bis zwei Uhr, also bis zur Abschlußkante 3, erstreckt, senkrecht nach oben eine Konsolenwand 5, an deren Lenkerseite eine Konsole 6 ausgebildet ist. Die gemäß der Darstellung in Fig. 2 linke Seite der Konsolenwand 5 verläuft in einem konvexen Bogen 7, während die rechte Seite in einer in etwa senkrecht verlaufenden Abschlußkante 8 endet. Die Konsole 6 wird gebildet durch zwei parallel und senkrecht zur Konsolenwand verlaufende Stege 9, deren oberen und unteren Enden jeweils zu einem Halbrund 10 erweitert sind. Der Bereich zwischen diesen Erweiterungen ist massiv ausgeführt und jeweils von einer Querbohrung 11 durchsetzt, durch die die Bolzen zur Befestigung eines Federbeins hindurchgeführt werden.

Die Konsolenwand 5 wird an der Radseite durch eine Brücke 12 abgestützt. Diese beginnt an der Nabe 1 mit einer Breite, die etwa dem Durchmesser der Nabe entspricht, und verläuft in einem Viertelbogen zum oberen Ende der Konsolenwand 5. Dabei reduziert sich ihre Breite bis sie am Übergang zur Konsolenwand der Breite der Konsole 6 entspricht. Auf diese Weise entsteht ein Raum, der nach unten durch die Teilhülse 2, zum Rad hin durch die Brücke 12 und zu den Lenkern hin durch die Konsolenwand 5 begrenzt ist.

Die in Fahrtrichtung weisende seitliche Öffnung dieses Raums wird durch eine Querwand 13 geschlossen, die gut in der Fig. 2 zu erkennen ist. Die andere Seite bleibt offen (siehe Fig. 1).

Die Querwand 13 schließt an die Abschlußkante 8 der Konsolenwand 5 und an die Abschlußkante 3 der Teilhülse 2 an. Außerdem geht die äußere Wandfläche glatt in eine gebogene Abschnittsfläche 14 an der Außenseite der Nabe 1 über, auf die eine Konsole 15 zur Befestigung eines Bremssattels aufgesetzt ist. Am unteren Ende der Teilhülse 2 erstreckt sich in etwa tangential zu dieser eine Tragwand 16, die seitlich auskragt und an deren freien Ende ein Befestigungsauge 17 für eine Spurstange ausgebildet ist. Die Tragwand 16 verläuft im wesentlichen horizontal und wird durch eine senkrecht verlaufende Strebe 18 gehalten, die eine Verlängerung der Konsolenwand 5 darstellt. Diese Strebe 18 läuft in etwa senkrecht in die Tragwand 16 ein und stützt diese von oben ab.

Unterhalb der Nabe 1 verläuft quer eine langgestreckte, senkrecht stehende Sockelwand 19, die mit ihrem einen Ende die Tragwand 16 von unten abstützt und mit ihrem anderen Ende in etwa bis zur Konsole 15 für den Bremssattel reicht. An der Lenkerseite der Sockelwand 19 sind zwei Backen 20 ausgebildet, zwischen denen der unterer Querlenker einer Radaufhängung gehalten wird. An der Radseite der Sockelwand 19 sind die Backen 20 durch zwei Stützen 21 abgestützt, die zwischen der Nabe 1 und der Sockelwand 19 ausgebildet sind und auf die beiden unteren Bolzenlöcher 4 zulaufen.

## Patentansprüche

1. Achsschenkel mit einer Nabe (1) zur Aufnahme eines Radlagers und mit einer Konsole (6) zur Befestigung eines Radlenkers, insbesondere eines Federbeins, wobei die Konsole (6) an einem von der Nabe (1) abstehenden Arm ausgebildet ist, **dadurch gekennzeichnet, daß** der Arm von einer in etwa senkrecht stehenden Konsolenwand (5) gebildet wird, an deren dem Fahrzeug zugewandten Seite die Konsole (6) ausgebildet ist, und daß zwischen dem äußeren Ende der Konsolenwand (5) sowie der Nabe (1) eine Brücke (12) verläuft, wobei der Raum zwischen der Konsolenwand (5) und der Brücke (12) zur Seite hin, d. h. in Umfangsrichtung der Nabe (1) offen ist.

2. Achsschenkel nach Anspruch 1, **dadurch gekennzeichnet, daß** die Nabe (1) zur Lenkerseite in eine Teilhülse (2) übergeht, wobei die Konsolenwand (5) an das freie Ende der Teilhülse (2) anschließt.

3. Achsschenkel nach Anspruch 1 oder 2, **dadurch gekennzeichnet, daß** der Raum zu einer Seite von einer Querwand (13) verschlossen ist, wobei eine Abschlußkante (3) der Teilhülse (2) an das untere Ende der Querwand (13) anschließt.

4. Achsschenkel nach Anspruch 3, **dadurch gekennzeichnet, daß** die Querwand (13) in eine Abschnittsfläche (14) an der Nabe (1) übergeht, an der sich eine Konsole (15) zur Befestigung eines Bremssattels befindet.

5. Achsschenkel nach einem der vorhergehenden Ansprüche, **dadurch gekennzeichnet, daß** am unteren Ende des Achsschenkels tangential zur Teilhülse (2) eine sich zur Seite hin erstreckende Tragwand (16) verläuft, an deren freiem Ende ein Befestigungsauge (17) für eine Spurstange ausgebildet ist.

6. Achsschenkel nach Anspruch 5, **dadurch gekennzeichnet, daß** die Konsolenwand (5) nach unten in eine Strebe (18) verlängert ist, die im wesentlichen senkrecht auf die Tragwand (16) stößt.

7. Achsschenkel nach einem der vorhergehenden Ansprüche, **dadurch gekennzeichnet, daß** am unteren Ende der Teilhülse (2) ein Lagerauge (20) für einen Querlenker angeordnet ist und daß sich zwischen diesem Auge und dem Befestigungsauge (17) eine Sockelwand (19) unterhalb der Tragwand (16) und senkrecht dazu erstreckt.

8. Achsschenkel nach Anspruch 1, **dadurch gekennzeichnet, daß** die Brücke (12) an ihrem unteren Ende eine Breite aufweist, die in etwa dem Nabendurchmesser entspricht, und daß sie in einem Bogen zum oberen Ende der Konsolenwand (5) verläuft, wobei dort ihre Breite in etwa der Breite der Konsole (6) entspricht.

## Claims

1. Stub axle with a hub (1) for receiving a wheel bearing and with a bracket (6) for the attachment of a wheel control arm, in particular a suspension strut, wherein the bracket (6) is formed on an arm projecting from the hub (1), **characterised in that** the arm is formed by an' approximately vertical bracket wall (5) on whose side facing towards the vehicle is formed the bracket (6), and **in that** between the outer end of the bracket wall (5) and the hub (1) runs a bridge (12), wherein the space between the bracket wall (5) and the bridge (12) opens to the side, i.e. in the circumferential direction of the hub (1).

2. Stub axle according to claim 1, **characterised in that** the hub (1) on the control arm side merges with a partial sleeve (2), wherein the bracket wall (5) adjoins the free end of the partial sleeve (2).

3. Stub axle according to claim 1 or 2, **characterised in that** the space on one side is closed by a transverse wall (13), wherein an end edge (3) of the partial sleeve (2) adjoins the lower end of the transverse wall (13).

4. Stub axle according to claim 3, **characterised in that** the transverse wall (13) merges with a section surface (14) on the hub (1), on which is located a bracket (15) for the attachment of a brake caliper.

5. Stub axle according to any of the preceding claims, **characterised in that** at the lower end of the stub axle tangentially to the partial sleeve (2) runs a supporting wall (16) which extends laterally and at whose free end is formed a fastening eye (17) for a track rod.

6. Stub axle according to claim 5, **characterised in that** the bracket wall (5) is extended downwards into a strut (18) which essentially abuts perpendicularly against the supporting wall (16).

7. Stub axle according to any of the preceding claims, **characterised in that** at the lower end of the partial sleeve (2) is arranged a bearing eye (20) for a transverse control arm and **in that** between this eye and the fastening eye (17) a base wall (19) extends beneath the supporting wall (16) and perpendicularly thereto.

8. Stub axle according to claim 1, **characterised in that** the bridge (12) at its lower end has a width which roughly corresponds to the hub diameter, and **in that** it extends in an arc to the upper end of the bracket wall (5), wherein there its width roughly corresponds to the width of the bracket (6).

## Revendications

1. Fusée d'essieu avec un moyeu (1) destiné à recevoir un roulement de roue et avec une console (6) pour la fixation d'un levier oscillant de roue, en particulier d'une jambe de force à ressort, la console (6) étant aménagée sur un bras écarté du moyeu (1), **caractérisée en ce que** le bras est formé par une paroi de console (5) sensiblement verticale, qui porte la console (6) sur sa face tournée vers le véhicule, et **en ce qu'**un arceau (12) s'étend entre l'extrémité extérieure de la paroi de console (5) et le moyeu (1), la chambre entre la paroi de console (5) et l'arceau (12) étant ouverte sur le côté, dans la direction de la périphérie du moyeu (1).

2. Fusée d'essieu selon la revendication 1, **caractérisée en ce que** le moyeu (1), côté levier, se transforme en un tunnel partiel (2), la paroi de console (5) se raccordant à l'extrémité libre du tunnel partiel (2).

3. Fusée d'essieu selon la revendication 1 ou 2, **caractérisée en ce que** la chambre est fermée d'un côté par une paroi transversale (13), un bord terminal (3) du tunnel partiel (2) se raccordant à l'extrémité inférieure de la paroi transversale (13).

4. Fusée d'essieu selon la revendication 3, **caractérisée en ce que** la paroi transversale (13) se transforme en une surface d'intersection (14) sur le moyeu (1), sur laquelle est aménagé une console (15) pour la fixation d'un étrier de frein.

5. Fusée d'essieu selon une des revendications précédentes, **caractérisée en ce qu'**à l'extrémité inférieure de la fusée d'essieu, une paroi support (16), à l'extrémité de laquelle est aménagé un bossage de fixation (17) pour une barre d'accouplement, s'étend tangentiellement au tunnel partiel (2), sur le côté.

6. Fusée d'essieu selon la revendication 5, **caractérisée en ce que** la paroi de console (5) et prolongée vers le bas par une aile (18) qui débouche sensiblement perpendiculairement sur la paroi support (16).

7. Fusée d'essieu selon une des revendications précédentes, **caractérisée en ce qu'**à l'extrémité inférieure du tunnel partiel (2) est disposé un bossage de palier (20) pour un bras oscillant transversal et **en ce qu'**entre ce bossage et le bossage de fixation (17), une paroi formant socle (19) s'étend au-dessous de la paroi support (16) et perpendiculairement à celle-ci.

8. Fusée d'essieu selon la revendication 1, **caractérisée en ce que** l'arceau (12), à son extrémité inférieure, a une largeur qui correspond approximativement au diamètre du moyeu et **en ce qu'**il s'étend suivant un arc en direction de l'extrémité supérieure de la paroi de console (5), sa largeur, à ce niveau, correspondant approximativement à la largeur de la console (6).
